(19) **Europäisches Patentamt**

**European Patent Office**

**Office européen des brevets**

(11) **EP 1 024 259 B1**

(12) **EUROPÄISCHE PATENTSCHRIFT**

(45) Veröffentlichungstag und Bekanntmachung des Hinweises auf die Patenterteilung:
**08.09.2004 Patentblatt 2004/37**

(51) Int Cl.$^7$: **F02D 33/02**

(21) Anmeldenummer: **00100409.2**

(22) Anmeldetag: **08.01.2000**

(54) **Vorrichtung zur Ladedruckregelung**

Boost pressure control apparatus

Dispositif de réglage de la pression de suralimentation

(84) Benannte Vertragsstaaten:
**DE ES FR IT**

(30) Priorität: **27.01.1999 DE 19903118**

(43) Veröffentlichungstag der Anmeldung:
**02.08.2000 Patentblatt 2000/31**

(73) Patentinhaber: **ROBERT BOSCH GMBH**
**70442 Stuttgart (DE)**

(72) Erfinder:
- **Engel, Gerhard**
  **70469 Stuttgart (DE)**
- **Birk, Manfred**
  **71739 Oberriexingen (DE)**
- **Meier, Frank**
  **70806 Kornwestheim (DE)**
- **Bleile, Thomas**
  **70435 Stuttgart (DE)**
- **Rupp, Peter**
  **71686 Remseck (DE)**
- **Kraemer, Wolfgang**
  **70191 Stuttgart (DE)**

(56) Entgegenhaltungen:
**DE-A- 3 612 904          DE-A- 4 228 279**
**DE-C- 19 502 150**

## Beschreibung

### Stand der Technik

Die vorliegende Erfindung betrifft eine Vorrichtung zur Ladedruckregelung einer aufgeladenen Brennkraftmaschine, wobei mindestens ein Regler aus der Regelabweichung zwischen einem Ladedruck-Sollwert und einem Ladedruck-Istwert eine Stellgröße für ein Lader-Stellglied bildet.

Eine derartige Vorrichtung ist aus der DE 195 02 150 C1 bekannt. In dem Regelkreis für den Ladedruck befindet sich ein Proportional-Regler, ein Differential-Regler und ein Integral-Regler. Um starke Überschwinger bei der Regelung des Ladedrucks zu vermeiden, wird die vom Integral-Regler durchgeführte Integration der Regelabweichung auf einen vorgebbaren Grenzwert beschränkt. Es sind verschiedene Grenzwerte für stationäre und für dynamische Betriebszustände vorgebbar. Der dynamische Grenzwert wird mit Korrekturwerten, die von Betriebskenngrößen abhängen, versehen.

Der Erfindung liegt die Aufgabe zugrunde, eine Vorrichtung zur Ladedruckregelung der eingangs genannten Art anzugeben, die eine weitere Verbesserung bezüglich der Schnelligkeit des Regelvorgangs und der Verringerung von Überschwingvorgängen mit sich bringt.

### Vorteile der Erfindung

Die genannte Aufgabe wird mit den Merkmalen des Patentanspruchs 1 gelöst. Durch die Normierung des Ladedruck-Sollwertes und des Ladedruck-Istwertes auf den abhängig von Betriebsgrößen der Brennkraftmaschine bestimmten, weitest möglichen Ladedruckbereich wird erreicht, daß der Ladedruck bei Erhöhung der Einspritzmenge und einem Anstieg der Motordrehzahl ohne große Verzögerung ansteigt und seinen Sollwert auch wenig überschreitet, d.h. daß keine signifikanten Überschwingungen bei der Regelung auftreten.

Vorteilhafte Weiterbildungen der Erfindung gehen aus den Unteransprüchen hervor.

Es kann neben einem Proportional-Regler auch noch ein Integral-Regler und/oder ein Differntial-Regler vorhanden sein.

Der Regelvorgang wird hinsichtlich seiner Schnelligkeit und seines Überschwingverhaltens positiv beeinflußt, wenn der Ladedruckbereich, auf den der Ladedruck-Sollwert und der Ladedruck-Istwert normiert werden, in Abhängigkeit von Betriebsgrößen, welche einen Einfluß auf die Regelstrecke haben, bestimmt wird. Als Betriebsgrößen kommen dabei die Motordrehzahl und/oder die Einspritzmenge und/oder der Hub eines Abgasrückführventils und/oder die Drosselklappenstellung in Frage. Eine noch bessere Anpassung des Regelvorgangs an die nichtlinearen Eigenschaften der Regelstrecke läßt sich dadurch erreichen, daß der Ladedruck-Sollwert und der Ladedruck-Istwert für die verschiedenen Regler unterschiedlich normiert werden. In diesem Sinne ist es besonders vorteilhaft, daß die Normierung des Ladedruck-Sollwertes und des Ladedruck-Istwertes für einen Proportional-Regler und die Normierung des Ladedruck-Sollwertes für einen Integralregler in Abhängigkeit von den aktuellen Werten der Motordrehzahl und der Einspritzmenge erfolgt, und daß die Normierung des Ladedruck-Istwertes für einen Integral-Regler in Abhängigkeit von gefilterten Werten der Motordrehzahl und/oder der Einspritzmenge und/oder des Hubes eines Abgasrückführventils erfolgt, wobei die Filter für die Motordrehzahl und/oder die Einspritzmenge und/oder den Hub des Abgasrückführventils Verzögerungsglieder sind, deren Verzögerungszeitkonstanten von ein oder mehreren Motorbetriebsgrößen abhängen. Diese Motorbetriebsgrößen können zum Beispiel die Motordrehzahl oder der Kraftstoffverbrauch sein.

Zur Verbesserung des Überschwingverhaltens der Regelung kann der Sollwert für den I-Regler in seiner Steigung begrenzt werden.

### Beschreibung eines Ausführungsbeispiels

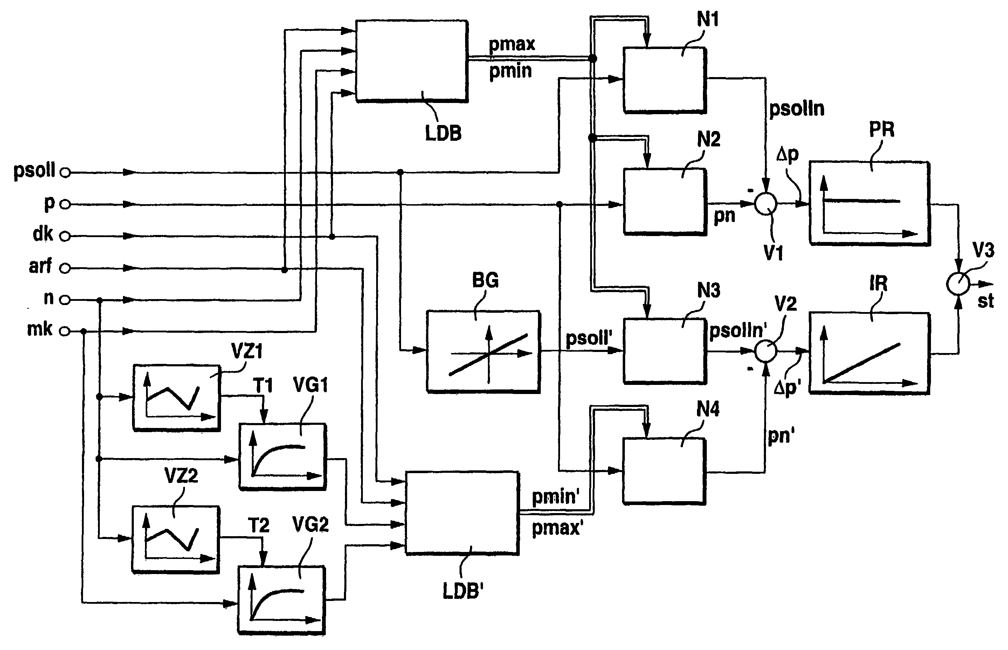

Anhand eines in der Zeichnung dargestellten Ausführungsbeispiels wird nachfolgend die Erfindung näher erläutert. Die einzige Figur der Zeichnung zeigt ein Funktionsdiagramm einer Ladedruckregelung.

Das Funktionsdiagramm weist folgende für die Ladedruckregelung verwendete Eingangsgrößen auf:

- Ladedruck-Sollwert psoll, der in bekannter Weise aus einem Kennfeld in Abhängigkeit zum Beispiel von der Motordrehzahl und dem Drosselklappenöffnungswinkel oder der Einspritzmenge herausgelesen wird,
- Ladedruck-Istwert p, der über einen Drucksensor im Ansaugrohr des Motors gemessen oder aus anderen Betriebsgrößen berechnet wird,
- Drosselklappenöffnungswinkel dk,
- Hub arf eines Abgasrückführventils (sofern vorhanden),
- Motordrehzahl n und
- Kraftstoffeinspritzmenge mk.

Aus der Regelabweichung zwischen dem Ladedruck-Sollwert psoll und dem Ladedruck-Istwert p wird mit Hilfe eines Proportional-Reglers PR und eines Integral-Reglers IR eine Stellgröße st für ein Lader-Stellglied gebildet. Das Lader-Stellglied kann ein Bypass-Ventil an der Turbine eines Abgasturboladers oder eine Einrichtung, welche die Turbinengeometrie verändert, sein. Zusätzlich zu dem Proportional-Regler PR und dem Integral-Regler IR kann auch noch ein Differential-Regler (in der Zeichnung nicht dargestellt) eingesetzt werden. Die Stellgröße st für das Lader-Stellglied setzt sich dann aus der von einem Verknüpfungsglied V3 gebildeten Summe der Ausgangssignale der vorhandenen Regler PR, IR zusammen.

Dem Proportional-Regler PR und dem Integral-Regler IR werden nicht die aus dem Ladedruck-Sollwert psoll und dem Ladedruck-Istwert p direkt gebildeten Regelabweichungen zugeführt, sondern es wird für den Proportional-Regler PR eine Regelabweichung $\Delta p$ aus einem normierten Ladedruck-Sollwert psolln und einem normierten Ladedruck-Istwert pn und für den Integral-Regler IR eine Regelabweichung $\Delta p'$ zwischen einem normierten Ladedruck-Sollwert psolln' und einem normierten Ladedruck-Istwert pn' gebildet. Ein Verknüpfungsglied V1 ermittelt die Regelabweichung $\Delta p$ für den Proportional-Regler PR aus der Differenz zwischen dem normierten Ladedruck-Sollwert psolln und dem normierten Ladedruck-Istwert pn. Ein Verknüpfungsglied V2 ermittelt die Regelabweichung $\Delta p'$ für den Integral-Regler IR aus der Differenz zwischen dem normierten Ladedruck-Sollwert psolln' und dem normierten Ladedruck-Istwert pn'.

Für jeden der normierten Ladedruckwerte psolln, pn, psolln' und pn' ist ein Funktionsblock N1, N2, N3 und N4 dargestellt, in dem eine Normierung des Ladedruck-Sollwertes psoll und des Ladedruck-Istwert p stattfindet. Die normierten Ladedruckwerte psolln, pn, psolln' und pn' werden in den Normierungs-Funktionsblöcken N1, N2, N3 und N4 gemäß den nachfolgenden Gleichungen (1) bis (4) gebildet.

$$(1) \qquad psolln = (psoll - pmin) / (pmax - pmin)$$

$$(2) \qquad pn = (p - pmin) / (pmax - pmin)$$

$$(3) \qquad psolln' = (psoll' - pmin) / (pmax - pmin)$$

$$(4) \qquad pn' = (p - pmin') / (pmax' - pmin')$$

Die bei der Normierung verwendeten Werte pmax und pmin sind die Grenzen des weitestmöglichen Ladedruckbereichs, der durch den kleinsten pmin bei der niedrigsten Einstellung des Lader-Stellgliedes (Bypassventil geöffnet oder Leitschaufeln des Turboladers mit variabler Turbinengeometrie ganz geöffnet) und den größten pmax bei der höchsten Einstellung des Lader-Stellgliedes (Bypassventil geschlossen oder Leitschaufeln vollständig geschlossen) erreichbaren Ladedruck definiert ist. Diese beiden Ladedruckwerte pmax und pmin, die auf dem Prüfstand des Motors ausgemessen werden können, sind in dem Funktionsblock LDB abgelegt. In dem Funktionsblock LDB werden Einflüsse von Betriebsgrößen - z.B. der Motordrehzahl n und/oder der Kraftstoffeinspritzmenge mk und/oder dem Hub arf eines vorhandenen Abgasrückführventils und/oder die Drosselklappenöffnung dk - auf den minimal möglichen pmin und den maximal möglichen pmax Ladedruck berücksichtigt. Dazu kann in dem Funktionsblock LDB ein Kennlinienfeld abgespeichert sein, welches die Abhängigkeit des minimalen pmin und des maximalen pmax Ladedrucks von den zuvor genannten Betriebsgrößen wiedergibt.

Die von dem Funktionsblock LDB bereitgestellten minimalen und maximalen Ladedruckwerte pmin und pmax werden für die Ermittlung des normierten Ladedruck-Sollwertes psolln und des normierten Ladedruck-Istwertes pn für den Proportional-Regler PR und auch für die Ermittlung des normierten Ladedruck-Sollwertes psolln' für den Integral-Regler IR verwendet. Der Ladedruck-Sollwert psoll kann, bevor er der Normierung im Funktionsblock N3 für den Integral-Regler IR unterzogen wird, im Funktionsblock BG in seiner Steigung begrenzt, woraus der in Gleichung (3) eingesetzte begrenzte Sollwert psoll' resultiert. Die Steigungsbegrenzung des Sollwertes bewirkt, daß sich der Sollwert nich wesentlich schneller ändert als der Istwert des Ladedrucks. Dadurch werden bei schnellen Sollwertänderungen unnötig große Stelleingriffe des Integral-Reglers vermieden und Überschwingvorgänge verringert.

Für die Bildung des normierten Ladedruck-Istwertes pn' für den Integral-Regler IR werden andere Grenzen pmin' und pmax' des Ladedruckbereichs herangezogen als für die anderen normierten Ladedruckwerte psolln, pn und psolln'. Die untere Grenze pmin' und die obere Grenze pmax' des weitestmöglichen Ladedruckbereichs wird nicht direkt in Abhängigkeit von der Motordrehzahl n und der Einspritzmenge mk, sondern von gefilterten Werten der Motordrehzahl n und der Einspritzmenge mk bestimmt. Für die Motordrehzahl n ist als Filter ein Verzögerungsglied VG1 und für die Einspritzmenge mk als Filter ein Verzögerungsglied VG2 vorgesehen. Diese Verzögerungsglieder VG1 und VG2 können ersten oder auch zweiten Grades sein. Die Verzögerungszeitkonstante T1 für das Verzögerungsglied VG1 und die Verzögerungszeitkonstante T2 für das Verzögerungsglied VG2 werden in Abhängigkeit von der Motordrehzahl n eingestellt. Dazu sind Kennlinien VZ1 und VZ2 abgespeichert, welche den Zusammenhang zwischen den Verzögerungszeitkonstanten T1 und T2 und der Motordrehzahl n darstellen. Bei der Ermittlung der Verzögerungszeitkonstanten T1 und T2 können auch noch die Einflüsse anderer Betriebsgrößen, z.B. der Kraftstoffverbrauch, berücksichtigt werden. Durch die Filterung der Motordrehzahl n und der Einspritzmenge mk werden die wahren Verhältnisse innerhalb des Luftsystems des Motors besser approximiert, was für den Integral-Regler IR besonders wichtig ist. Insbesondere wird dadurch sichergestellt, daß die Regelabweichung $\Delta p'$ am Eingang des Integral-Reglers IR bei schnellen Betriebspunktänderungen das richtige Vorzeichen hat.

Bei der Ermittlung der Grenzen pmin' und pmax' des Ladedruckbereichs in dem Funktionsblock LDB' werden auch der Hub arf eines evtl. vorhandenen Abgasrückführventils und die Drosselklappenöffnung dk berücksichtigt. Auch diese Größen arf und/oder dk können vor der Weiterverarbeitung in dem Funktionsblock LDB' einer Filterung unterzogen werden. Die in dem Ausführungsbeispiel eingezeichneten Größen arf für das Abgasrückführventil und dk für die Drosselklappe müssen nicht notwendigerweise bei der Bestimmung des Ladedruckbereichs pmin-pmax und pmin'-pmax' mit berücksichtigt werden.

Änderungen der Betriebsgrößen, von denen die Grenzen pmin und pmax abhängen, wirken nicht sofort sondern verzögert auf die Grenzen. Diese Verzögerungen werden durch die Verzögerungsglieder VG1 und VG2 näherungsweise nachgebildet. Die Verzögerungen selbst hängen wiederum vom Bertriebspunkt ab und werden deshalb über die Kennlinien VZ1 und VZ2 bestimmt. Somit geben die Grenzen pmin' und pmax' in dynamischen Bertriebszuständen die momentan wahren Grenzen genauer wieder als die Grenzen pmin und pmax. Die bessere Approximation der Grenzen ist für den Integral-Regler IR besonders wichtig, da hier Ungenauigkeiten während dynamischer Übergänge zu starkem Überschwingen des Ladedrucks, bis er einen stationären Wert erreicht, führen. Für den Proportional-Regler PR werden die ungenaueren Grenzen pmin und pmax verwendet, weil damit ein ruckartiger Ladedruckanstieg erfolgt.

**Patentansprüche**

1. Vorrichtung zur Ladedruckregelung einer aufgeladenen Brennkraftmaschine, wobei mindestens ein Regler (PR, IR) aus der Regelabweichung zwischen einem Ladedruck-Sollwert (psoll) und einem Ladedruck-Istwert (p) eine Stellgröße (st) für ein Lader-Stellglied bildet, **dadurch gekennzeichnet, dass** Mittel (LDB, LDB', N1, N2, N3, N4) vorhanden sind, welche den Ladedruck-Sollwert (psoll) und den Ladedruck-Istwert (p) für die Ermittlung der Regelabweichung auf den abhängig von Betriebsgrößen der Brennkraftmaschine bestimmten weitest möglichen Ladedruckbereich normieren, der durch den jeweils kleinsten (pmin, pmin') bei der niedrigsten Einstellung des Stellgliedes und den jeweils größten (pmax, pmax') bei der höchsten Einstellung des Stellgliedes erreichbaren Ladedruck definiert ist.

2. Vorrichtung nach Anspruch 1, **dadurch gekennzeichnet, dass** ein Proportional-Regler (PR) und ein Integral-Regler (IR) und/oder ein Differential-Regler vorhanden sind, die zusammen die Stellgröße (st) bilden.

3. Vorrichtung nach Anspruch 1, **dadurch gekennzeichnet, dass** Mittel (LDB, LDB') vorhanden sind, welche den weitest möglichen Ladedruckbereich in Abhängigkeit von Betriebsgrößen (n, mk, arf, dk), welche einen Einfluss auf die Regelstrecke haben, bestimmen.

4. Vorrichtung nach Anspruch 3, **dadurch gekennzeichnet, dass** zu den Betriebsgrößen die Motordrehzahl (n) und/oder die Einspritzmenge (mk) und/oder der Hub (arf) eines Abgasrückführventils und/oder die Drosselklappenstellung (dk) gehören.

5. Vorrichtung nach einem der vorhergehenden Ansprüche, **dadurch gekennzeichnet, dass** die Normierung des Ladedruck-Sollwertes (psoll) und des Ladedruck-Istwertes (p) für einen Proportional-Regler (PR) und die Normierung des Ladedruck-Sollwertes (psoll) für einen Integral-Regler (IR) in Abhängigkeit von den aktuellen Werten der Motordrehzahl (n) und der Einspritzmenge (mk) erfolgt, und dass die Normierung des Ladedruck-Istwertes (p) für den Integral-Regler (IR) in Abhängigkeit von gefilterten Werten der Motordrehzahl (n) und/oder der Einspritzmenge (mk) und/oder des Hubes (arf) eines Abgasrückführventils und/oder der Drosselklappenstellung (dk) erfolgt, wobei die Filter für die Motordrehzahl (n) und/oder die Einspritzmenge (mk) und/oder den Hub (arf) des Abgasrückführventils und/oder die Drosselklappenstellung (dk) Verzögerungsglieder (VG1, VG2) sind, deren Verzögerungszeitkonstanten (T1, T2) von einer oder mehreren Motorbetriebsgrößen (n) abhängen.

6. Vorrichtung nach Anspruch 5, **dadurch gekennzeichnet, dass** die Verzögerungszeitkonstanten (T1, T2) von der Motordrehzahl (n) oder vom Kraftstoffverbrauch abhängen.

7. Vorrichtung nach Anspruch 2, **dadurch gekennzeichnet, dass** Mittel (BG) vorgesehen sind, welche den Ladedruck-Sollwert (psoll) für den Integral-Regler (IR) in seiner Steigung begrenzen.

**Claims**

1. Device for controlling the supercharging pressure of a supercharged internal combustion engine, at least one controller (PR, IR) forming a manipulated variable (st) for a charger actuator from the control error between a supercharging pressure setpoint value (psoll) and a supercharging pressure actual value (p), **characterized in that** means (LDB, LDB', N1, N2, N3, N4) are provided which, in order to obtain the control error, standardize the charging pressure setpoint value (psoll) and the charging pressure actual value (p) to the widest possible supercharging pressure range which is determined as a function of operating variables of the internal combustion engine and which is defined by the respective minimum achievable charge pressure (pmin, pmin') at the lowest setting of the actuator element and the respective maximum achievable charge pressure (pmax, pmax') at the highest setting of the actuator element.

2. Device according to Claim 1, **characterized in that** a proportional controller (PL) and an integral controller (IR) and/or a differential controller, which together form the manipulated variable (st), are present.

3. Device according to Claim 1, **characterized in that** means (LDB, LDB') are provided which determine the widest possible supercharging pressure range as a function of operating variables (n, mk, arf, dk) which influence the controlled system.

4. Device according to Claim 3, **characterized in that** the operating variables include the engine speed (n) and/or the injection quantity (mk) and/or the travel (arf) of an exhaust gas feedback valve and/or the throttle valve position (dk).

5. Device according to one of the preceding claims, **characterized in that** the standardization of the supercharging setpoint value (psoll) and of the supercharging actual value (p) is carried out for a proportional controller (PR), and the standardization of the supercharging setpoint value (psoll) is carried out for an integral controller (IR), as a function of the current values of the engine speed (n) and the injection quantity (mk) and **in that** the standardization of the supercharging pressure actual value (p) is carried out for the integral controller (IR) as a function of filtered values of the engine speed (n) and/or of the injection quantity (mk) and/or of the travel (arf) of an exhaust gas feedback valve and/or of the throttle valve position (dk), the filters for the engine speed (n) and/or the injection quantity (mk) and/or the travel (arf) of the exhaust gas feedback valve and/or the throttle valve position (dk) being delay elements (VG1, VG2) whose delay time constants (T1, T2) depend on one or more engine operating variables (n).

6. Device according to Claim 5, **characterized in that** the delay time constants (T1, T2) depend on the engine speed (n) or on the fuel consumption.

7. Device according to Claim 2, **characterized in that** means (BG) are provided which limit the supercharging pressure setpoint value (psoll) for the integral controller (IR) in terms of its positive gradient.

## Revendications

1. Dispositif de régulation de la pression de suralimentation d'un moteur à combustion interne chargé, dans lequel au moins un régulateur (PR, IR) forme, à partir de la différence de régulation entre une valeur de consigne de la pression de suralimentation (psoll) et une valeur réelle de la pression de suralimentation (p), une grandeur de réglage (st) pour actionneur du chargeur,
**caractérisé en ce qu'**
il est prévu des moyens (LDB, LDB', N1, N2, N3, N4) qui normalisent la valeur de consigne de la pression de suralimentation (psoll) et la valeur réelle de la pression de suralimentation (p), pour la détermination de la différence de régulation, à la plage de pression de suralimentation la plus large possible, déterminée en fonction de grandeurs de fonctionnement du moteur à combustion interne, la plage de pression de suralimentation étant définie d'une part, par la plus petite pression de suralimentation pouvant être atteinte (pmin, pmin') lors du réglage au minimum de l'actionneur et d'autre part, par la plus grande pression de suralimentation pouvant être atteinte (pmax, pmax') lors du réglage au maximum de l'actionneur.

2. Dispositif selon la revendication 1,
**caractérisé en ce qu'**
un régulateur proportionnel (PR) et un régulateur intégral (IR) et/ou un régulateur différentiel sont présents et forment conjointement la grandeur de réglage (st).

3. Dispositif selon la revendication 1,
**caractérisé en ce qu'**
il est prévu des moyens (LDB, LDB') permettant de déterminer la plage de pression de suralimentation la plus large possible en fonction de grandeurs de fonctionnement (n, mk, arf, dk) ayant une influence sur l'étendue de la régulation.

4. Dispositif selon la revendication 3,
**caractérisé en ce que** les grandeurs de fonctionnement comprennent le régime moteur (n) et/ou la quantité injectée (mk) et/ou la course (arf) d'une soupape de refoulement des gaz d'échappement et/ou la position du papillon des gaz (dk).

5. Dispositif selon l'une des revendications précédentes,
**caractérisé en ce que**
la normalisation de la valeur de consigne de la pression de suralimentation (psoll) et de la valeur réelle de la pression de suralimentation (p) pour un régulateur proportionnel (PR) et la normalisation de la valeur de consigne de la pression de suralimentation (psoll) pour un régulateur intégral (IR) s'effectuent en fonction des valeurs actuelles du régime moteur (n) et de la quantité injectée (mk), et **en ce que** la normalisation de la valeur réelle de la pression de suralimentation (p) pour le régulateur intégral (IR) s'effectue en fonction de valeurs filtrées du régime moteur (n) et/ou de la quantité injectée (mk) et/ou de la course (arf) d'une soupape de refoulement des gaz d'échappement et/ou de la position du papillon des gaz (dk), les filtres pour le régime moteur (n) et/ou pour la quantité injectée (mk) et/ou pour la course (arf) de la soupape de refoulement des gaz d'échappement et/ou pour la position du papillon des gaz (dk) étant des circuits de retard (VG1, VG2), dont les constantes temporelles de retard (T1, T2) dépendent d'une ou de plusieurs valeurs de fonctionnement du moteur (n).

6. Dispositif selon la revendication 5,
**caractérisé en ce que**
les constantes temporelles de retard (T1, T2) dépendent du régime moteur (n) ou de la consommation de carburant.

7. Dispositif selon la revendication 2,
**caractérisé en ce que**
des moyens (BG) sont prévus pour limiter la valeur de consigne de la pression de suralimentation (psoll) pour le régulateur intégral (IR) dans son augmentation.